# EUROPÄISCHE PATENTANMELDUNG

(11) **EP 4 467 428 A2**
(43) Veröffentlichungstag der Anmeldung: **27.11.2024**
(21) Anmeldenummer: 24173764.2
(22) Anmeldetag: 02.05.2024
(51) Int. Cl.: B62D 59/04

(54) **VERFAHREN ZUM BETREIBEN EINES HILFSANTRIEBS FÜR EINEN ANHÄNGER SOWIE HILFSANTRIEB FÜR EINEN ANHÄNGER**

(30) Priorität: 26.05.2023 DE 102023114019
(71) Anmelder: Reich Gesellschaft mbH Regel- und Sicherheitstechnik, 35713 Eschenburg (DE)
(72) Erfinder: Bender, Steffen, Eschenburg (DE); Schaurer, Oliver, Oberding (DE); Neitz, Markus, Eschenburg (DE)
(74) Vertreter: Hofstetter, Schurack & Partner

(57) **Zusammenfassung**

Die Erfindung betrifft ein Verfahren zum Betreiben eines Hilfsantriebs (34) für einen Anhänger (10), bei welchem mittels einer Eingabeeinrichtung (28) eine durch eine Person bewirkte Freigabeeingabe in die Eingabeeinrichtung (28) erfasst wird. Mittels einer elektronischen Recheneinrichtung wird die Freigabeeingabe mit einer vorgegebenen Referenzeingabe verglichen. Mittels der elektronischen Recheneinrichtung wird der Hilfsantrieb (34) für ein Antreiben des Anhängers (10) dann und nur dann freigegeben, wenn der Vergleich der Freigabeeingabe mit der Referenzeingabe ergibt, dass die Freigabeeingabe mit der Referenzeingabe übereinstimmt.

## Beschreibung

Die vorliegende Erfindung betrifft ein Verfahren zum Betreiben eines Hilfsantriebs für einen Anhänger, insbesondere einen Wohnwagen, einen Bootsanhänger, einen Verkaufswagen, einen Transportanhänger oder einen Autotransportanhänger. Außerdem betrifft die Erfindung einen solchen Hilfsantrieb für einen Anhänger, insbesondere für einen Wohnwagen, einen Bootsanhänger, einen Verkaufswagen, einen Transportanhänger oder einen Autotransportanhänger. Die Erfindung betrifft auch ein Verfahren zum Betreiben einer Erfassungseinrichtung zum Ermitteln eines Zustands zumindest eines Teils eines Fahrzeugs, insbesondere eines Anhängers. Des Weiteren betrifft die Erfindung ein Verfahren zum Betreiben einer Waage zum Ermitteln eines Gewichts eines Fahrzeugs, insbesondere eines Anhängers. Darüber hinaus betrifft die Erfindung ein Verfahren zum Aktualisieren eines zum Betreiben eines Hilfsantriebs für einen Anhänger ausgebildeten und in einem elektronischen Datenspeicher des Hilfsantriebs gespeicherten Computerprogramms. Ferner betrifft die Erfindung ein Verfahren zum Auslesen eines elektronischen Fehlerspeichers eines Anhängers und/oder eines Hilfsantriebs für einen Anhänger. Schließlich betrifft die Erfindung ein Verfahren zum Fernsteuern wenigstens einer Komponente eines Anhängers von außerhalb des Anhängers.

Hilfsantriebe für Anhänger, insbesondere für Wohnwagen, Bootsanhänger, Verkaufswagen, Transportanhänger und ähnliche Anhänger sind aus dem allgemeinen Stand der Technik bereits hinlänglich bekannt. Ein solcher Hilfsantrieb dient insbesondere dazu, den Anhänger in einem Zustand, in welchem der Anhänger von einer Zugmaschine entkoppelt ist, zu bewegen. Dies ist insbesondere vorteilhaft bei Anhängern, die beispielsweise auf Campingplätzen oder Wohnwagen-Parkplätzen bewegt und dabei rangiert werden müssen. Bei einem solchen bekannten Hilfsantrieb ist wenigstens ein Antriebselement mit zumindest einem einfach auch als Rad bezeichneten Fahrzeugrad des Anhängers im Zusammenwirken bringbar. Bei dem Antriebselement handelt es sich beispielsweise um eine Antriebswalze des Hilfsantriebs, wobei die Antriebswalze beispielsweise in, insbesondere direktem, Kontakt mit dem Rad bewegt und in, insbesondere direktem, Kontakt mit dem Rad gehalten wird. Mit Hilfe wenigstens eines Motors, insbesondere eines Elektromotors, des Hilfsantriebs wird die Antriebswalze angetrieben, wodurch das sich in Zusammenwirken, insbesondere in Kontakt, mit der Antriebswalze befindende Fahrzeugrad des Anhängers gedreht beziehungsweise bewegt wird, insbesondere relativ zu deinem Fahrgestell des Anhängers. Dadurch kann der Anhänger in abgekoppeltem Zustand des Anhängers präziser rangiert werden.

Dabei ist der EP 3 135 569 A1 ein Verfahren zum Betreiben eines Hilfsantriebs für einen Anhänger als bekannt zu entnehmen. Des Weiteren offenbart die EP 2 289 776 B1 einen Hilfsantrieb für fremdbewegte Fahrzeuge.

Aufgabe der vorliegenden Erfindung ist es, ein Verfahren zum Betreiben eines Hilfsantriebs für einen Anhänger sowie einen Hilfsantrieb für einen Anhänger zu schaffen, sodass ein besonders sicherer Betrieb des Hilfsantriebs realisiert werden kann.

Diese Aufgabe wird erfindungsgemäß durch ein Verfahren mit den Merkmalen des Anspruchs 1 sowie durch einen Hilfsantrieb mit den Merkmalen des Anspruchs 10 gelöst.

Eine weitere Aufgabe der Erfindung ist es, Verfahren zu schaffen, sodass Komponenten für Fahrzeuge und/oder von Fahrzeugen besonders vorteilhaft betrieben werden können.

Diese Aufgabe wird durch die Gegenstände der Patentansprüche 11 bis 15 gelöst.

Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines auch als Rangierantrieb bezeichneten Hilfsantriebs für einen Anhänger, insbesondere einen Wohnwagen, einen Bootsanhänger, einen Verkaufswagen, einen Transportanhänger, einen Autotransportanhänger oder einen anderen Anhänger. Der Anhänger ist ein Fahrzeug, insbesondere ein Landfahrzeug, wobei der Anhänger beispielsweise wenigstens oder genau zwei Bodenkontaktelemente, insbesondere wenigstens oder genau vier Bodenkontaktelemente, aufweist. Insbesondere ist das jeweilige Bodenkontaktelement ein jeweiliges, einfach auch als Rad bezeichnetes Fahrzeugrad des Anhängers, wobei das Fahrzeugrad beispielsweise drehbar an einem Fahrgestell des Anhängers gehalten ist. Der Anhänger ist entlang seiner einfach auch als Hochrichtung bezeichneten Fahrzeughochrichtung nach unten hin über die Bodenkontaktelemente an einem Boden abstützbar oder abgestützt. Wird der Anhänger entlang des Bodens gefahren, indem der Anhänger beispielsweise mittels eines mechanischen, insbesondere gelenkig mit dem Anhänger gekoppelten Zugfahrzeugs entlang des Bodens gezogen oder gedrückt wird, während der Anhänger in Fahrzeughochrichtung des Anhängers nach unten hin über die Bodenkontaktelemente an dem Boden abgestützt ist, so rollt das jeweilige Bodenkontaktelement, insbesondere direkt, an dem Boden ab. Beispielsweise handelt es sich bei dem Fahrgestell um einen Rahmen des Anhängers. Der Anhänger kann beispielsweise einen Aufbau aufweisen, durch welchen beispielsweise ein Innenraum des Anhängers begrenzt ist. Beispielsweise können sich in dem Innenraum Personen aufhalten. Dabei ist es insbesondere vorgesehen, dass der Aufbau separat von dem Rahmen ausgebildet und an dem Rahmen befestigt, insbesondere durch den Rahmen getragen, ist.

Bei dem Verfahren wird mittels einer, insbesondere elektrischen oder elektronischen, Eingabeeinrichtung eine durch eine Person bewirkte Freigabeeingabe in die Eingabeeinrichtung erfasst. Insbesondere ist die Eingabeeinrichtung Bestandteil des Hilfsantriebs. Die Eingabeeinrichtung ist beispielsweise Bestandteil eines insbesondere elektrischen oder elektronischen Eingabegeräts, wobei beispielsweise die Person über die Eingabeeinrichtung Eingaben wie beispielsweise die Freigabeeinrichtung in das Eingabegerät durchführen oder vornehmen kann.

Bei dem Verfahren wird mittels einer elektronischen Recheneinrichtung, insbesondere des Hilfsantriebs, die mittels der Eingabeeinrichtung erfasste Freigabeeingabe mit einer vorgegebenen Referenzeingabe verglichen. Beispielsweise ist die Referenzeingabe in einem insbesondere elektrischen oder elektronischen Datenspeicher, insbesondere der elektronischen Recheneinrichtung, gespeichert. Mit anderen Worten, die Eingabeeinrichtung stellt beispielsweise wenigstens ein insbesondere elektrisches Eingabesignal bereit, welches die mittels der Eingabeeinrichtung erfasste, durch die Person bewirkte Freigabeeingabe charakterisiert. Dabei ist oder umfasst beispielsweise das Eingabesignal Eingabedaten, welche die mittels der Eingabeeinrichtung erfasste, durch die Person bewirkte Freigabeeingabe charakterisieren, das heißt beschreiben oder angeben. Beispielsweise empfängt die elektronische Recheneinrichtung das Eingabesigna. Somit empfängt beispielsweise die elektronische Recheneinrichtung die Eingabedaten. Die Referenzeingabe ist beispielsweise durch Referenzdaten charakterisiert. Mit anderen Worten geben beispielsweise die Referenzdaten die Referenzeingabe an oder die Referenzdaten beschreiben die Referenzeingabe. Dabei sind beispielsweise die Referenzdaten in dem Datenspeicher gespeichert. Die elektronische Recheneinrichtung vergleicht beispielsweise die Eingabedaten mit den Referenzdaten, wodurch die elektronische Recheneinrichtung die Freigabeeingabe mit der Referenzeingabe vergleicht.

Die elektronische Recheneinrichtung wird auch als erste elektronische Recheneinrichtung bezeichnet. Wenn zuvor und im Folgenden die Rede von der elektronischen Recheneinrichtung ist, so ist darunter, falls nichts anderes angegeben ist, die erste elektronische Recheneinrichtung zu verstehen.

Mittels der elektronischen Recheneinrichtung oder mittels einer weiteren, zweiten elektronischen Recheneinrichtung wird der Hilfsantrieb für ein Antreiben des Anhängers, das heißt insbesondere für ein Antreiben der Bodenkontaktelemente und somit des Anhängers, dann und nur dann freigegeben, wenn der mittels der elektronischen Recheneinrichtung durchgeführte Vergleich der Freigabeeingabe mit der Referenzeingabe ergibt, das heißt wenn die elektronische Recheneinrichtung durch das Vergleichen der Freigabeeingabe mit der Referenzeingabe ermittelt, dass die Freigabeeingabe mit der Referenzeingabe übereinstimmt. Dabei ist es insbesondere vorgesehen, dass insbesondere mittels der elektronischen Recheneinrichtung ein mittels des Hilfsantriebs bewirkbares Antreiben des Anhängers so lange unterbunden, das heißt so lange gesperrt wird, bis mittels der Eingabeeinrichtung eine in die Eingabeeinrichtung bewirkte Eingabe erfasst wird, die der Referenzeingabe entspricht, mithin mit der Referenzeingabe übereinstimmt. Dadurch kann der Hilfsantrieb und somit das durch den Hilfsantrieb bewirkbare Antreiben des Anhängers vor einem unautorisierten, unerwünschten Zugriff geschützt werden, sodass ein besonders sicherer Betrieb gewährleistet werden kann.

Insbesondere ermöglicht es beispielsweise die Erfindung einem Vermieter und/oder Verkäufer des Hilfsantriebs, welcher eine Komponente des Anhängers oder eine Komponente für den Anhänger ist, die Referenzeingabe, beispielsweise in Form eines Pins, insbesondere eine Zahlenpins, vorzugeben. Hierfür hat beispielsweise der Vermieter beziehungsweise Verkäufer eine Software, die es ihm ermöglicht, die Referenzeingabe vorzugeben. Ferner ist es denkbar, dass der Vermieter oder Verkäufer oder ein Hersteller des Hilfsantriebs, insbesondere über eine entsprechende Software, den Hilfsantrieb für einen Betrieb des Hilfsantriebs für wenigstens oder genau eine vom Hersteller vorgegebene, endliche Zeitspanne freigibt. Hierfür ist es beispielsweise vorgesehen, dass die Referenzeingabe nur für oder währende der Zeitspanne gültig ist. Nach Ablauf der Zeitspanne wird der Hilfsantrieb nicht mehr für einen Betrieb freigegeben, wenn die Freigabeeingabe der Referenzeingabe entspricht, denn letztere ist abgelaufen und somit nicht mehr fültig.

Um den Hilfsantrieb besonders sicher vor einem unautorisierten Zugriff schützen und somit einen besonders sicheren Betrieb gewährleisten zu können, ist es bei einer Ausführungsform der Erfindung vorgesehen, dass die Referenzeingabe eine Folge von mehreren, das heißt wenigstens zwei alphanumerischen Zeichen umfasst. Vorzugsweise umfasst die Referenzeingabe eine Folge von mehr als zwei alphanumerischen Zeichen, wobei es vorzugsweise vorgesehen ist, dass die Referenzeingabe eine Folge von wenigstens oder genau vier alphanumerischen Zeichen umfasst.

Eine weitere Ausführungsform zeichnet sich dadurch aus, dass die Referenzeingabe eine Folge von Buchstaben und/oder Zahlen und/oder Symbolen umfasst. Insbesondere ist es vorzugsweise vorgesehen, dass die Referenzeingabe eine Folge von wenigstens oder genau vier Buchstaben und/oder Zahlen und/oder Symbolen umfasst. Dadurch kann der Hilfsantrieb vor einem unautorisierten Zugriff, das heißt vor einer unautorisierten, unerwünschten Nutzung besonders sicher geschützt werden, sodass ein besonders sicherer Betrieb des Hilfsantriebs gewährleistet werden kann.

Bei einer weiteren, besonders vorteilhaften Ausführungsform der Erfindung ist es vorgesehen, dass die Referenzeingabe eine entlang wenigstens einer vorgegebenen Bewegungsbahn erfolgende Bewegung zumindest eines Körperteils der Person umfasst. Hierdurch kann der Hilfsantrieb entsperrt, das heißt für ein oder das mittels des Hilfsantriebs bewirkbares Antreiben des Anhängers freigegeben werden, indem die Person mit ihrem Körperteil eine Geste wie beispielsweise eine Wischbewegung ausführt, die mit der Referenzeingabe übereinstimmen muss. Dadurch kann der Hilfsantrieb besonders sicher vor unautorisierter Nutzung geschützt werden, sodass eine besonders hohe Sicherheit darstellbar ist.

Um den Hilfsantrieb besonders sicher vor einer unautorisierten Nutzung schützen zu können, ist es in weiterer Ausgestaltung der Erfindung vorgesehen, dass die Referenzeingabe eine vorgegebene Abfolge von mehreren und somit wenigstens oder genau zwei Bewegungen zumindest eines Körperteils der Person umfasst.

Bei einer weiteren, besonders vorteilhaften Ausführungsform der Erfindung ist es vorgesehen, dass ein mobiles Endgerät verwendet wird. Zum einen kann hierdurch der Hilfsantrieb besonders sicher vor unautorisierter Nutzung geschützt werden. Zum anderen jedoch kann der Hilfsantrieb komfortabel entsperrt, das heißt für ein oder das mittels des Hilfsantriebs bewirkbares Antreiben des Anhängers freigegeben werden.

Insgesamt ist erkennbar, dass die Person den Hilfsantrieb dann und nur dann entsperren kann, wenn die Person in Kenntnis der Referenzeingabe ist und die Freigabeeingabe derart ausführt, das heißt derart bewirkt, dass die Freigabeeingabe der Referenzeingabe entspricht. Hierfür wird beispielsweise der Person die Referenzeingabe beispielsweise einem Betreiber und/oder einem Hersteller des Hilfsantriebs mitgeteilt. Die Person kann die Freigabeeingabe für sich behalten oder aber mit anderen Personen teilen, sodass nur die Person oder die Personen den Hilfsantrieb für ein Antreiben des Anhängers nutzen kann oder können, die in Kenntnis der Referenzeingabe ist oder sind und demzufolge die Freigabeeingabe derart durchführen kann oder können, dass die Freigabeeingabe der Referenzeingabe entspricht. Dadurch kann der Hilfsantrieb besonders sicher vor unerwünschter, unautorisierter Nutzung geschützt werden.

Als besonders vorteilhaft hat es sich gezeigt, wenn das Freigeben des Hilfsantriebs umfasst, dass der Hilfsantrieb für ein mittels des mobilen Endgeräts erfolgendes, leitungsloses Bedienen wenigstens eines zum Antreiben des Anhängers ausgebildeten Motors, insbesondere Elektromotors, des Hilfsantriebs und ein aus dem Bedienen des Motors resultierendes, durch den Motor bewirktes Antreiben des Anhängers freigegeben wird. Unter dem leitungslosen Bedienen mittels des mobilen Endgeräts ist zu verstehen, dass beispielsweise die Person Bedieneingaben in das mobile Endgerät vornehmen, das heißt durchführen kann. Mittels des mobilen Endgeräts werden die durch die Person bewirkten Bedieneingaben erfasst. In Abhängigkeit von den erfassten Bedieneingaben stellt beispielsweise das mobile Endgerät wenigstens ein insbesondere elektrisches Bediensignal leitungslos bereit. Ein Empfangselement des Hilfsantriebs kann beispielsweise das Bediensignal, insbesondere leitungslos, empfangen, wobei beispielsweise der Motor in Abhängigkeit von dem empfangenen Bediensignal angesteuert und dadurch betrieben wird, um dadurch den Anhänger in Abhängigkeit von dem Bediensignal sowie in Abhängigkeit von den Bedieneingaben anzutreiben. Einerseits kann dadurch der Hilfsantrieb sicher vor unautorisierter Nutzung geschützt werden. Andererseits kann insbesondere nach Entsperren des Hilfsantriebs der Hilfsantrieb einfach und komfortabel bedient werden.

Um den Hilfsantrieb besonders komfortabel entsperren, mithin für ein oder das durch den Hilfsantrieb bewirkbares Antreiben des Anhängers freigeben zu können, ist es in weiterer Ausgestaltung der Erfindung vorgesehen, dass als die Eingabeeinrichtung eine Eingabeeinrichtung des mobilen Endgeräts verwendet wird. Somit werden beispielsweise die Bedieneingaben mittels der Eingabeeinrichtung umfasst.

Dabei hat es sich als besonders vorteilhaft gezeigt, wenn als die Eingabeeinrichtung ein berührungsempfindlicher Bildschirm des mobilen Endgeräts verwendet wird. Dadurch kann die Person, wenn sie in Kenntnis der Referenzeingabe ist, den Hilfsantrieb komfortabel entsperren und beispielsweise in der Folge den Hilfsantrieb komfortabel bedienen. Andererseits kann der Hilfsantrieb sicher vor unerwünschter Nutzung geschützt werden.

Ein zweiter Aspekt der Erfindung betrifft einen Hilfsantrieb für einen Anhänger, wobei der Hilfsantrieb gemäß dem zweiten Aspekt der Erfindung zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Betreiben einer Erfassungseinrichtung zum Ermitteln eines Zustands zumindest eines Teils eines Fahrzeugs, insbesondere eines Wohnmobils. Das Fahrzeug kann ein Kraftfahrzeug, insbesondere ein Kraftwagen, sein. Ferner ist es denkbar, dass das Fahrzeug ein Anhänger, insbesondere ein Wohnwagen, ein Bootsanhänger, ein Verkaufswagen, ein Transportanhänger oder ein Autotransportanhänger ist.

Bei dem dritten Aspekt der Erfindung mittels einer insbesondere elektrischen oder elektronischen Eingabeeinrichtung eine durch eine Person bewirkte Freigabeeingabe in die Eingabeeinrichtung erfasst. Bei dem dritten Aspekt der Erfindung wird mittels einer elektronischen Recheneinrichtung die Freigabeeingabe mit einer vorgegebenen Referenzeingabe verglichen. Außerdem wird bei dem dritten Aspekt die Erfassungseinrichtung mittels der elektronischen Recheneinrichtung oder mittels einer weiteren elektronischen Recheneinrichtung für das Ermitteln des Zustands des Fahrzeugs dann und nur dann freigegeben wird, wenn der Vergleich der Freigabeeingabe mit der Referenzeingabe ergibt, dass die Freigabeeingabe mit der Referenzeingabe übereinstimmt. Alternativ oder zusätzlich wird bei dem dritten Aspekt mittels der elektronischen Recheneinrichtung oder mittels der weiteren elektronischen Recheneinrichtung oder mittels einer dritten elektronischen Recheneinrichtung eine zum Anzeigen wenigstens einer den ermittelten Zustand charakterisierenden Information ausgebildete, auch als Bildschirm bezeichnete elektronische Anzeige für das Anzeigen der Information dann und nur dann freigegeben wird, wenn der Vergleich der Freigabeeingabe mit der Referenzeingabe ergibt, dass die Freigabeeingabe mit der Referenzeingabe übereinstimmt. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt, wobei insbesondere im Hinblick auf die Beschreibung des ersten und zweiten Aspekts an die Stelle des Hilfsantriebs die Erfassungseinrichtung treten kann und umgekehrt.

Beispielsweise kann das oben genannte mobile Endgerät verwendet werden, welches insbesondere als ein mobiles Funkgerät, insbesondere als ein Mobiltelefon, ausgebildet sein kann. Ganz insbesondere ist somit das mobile Endgerät ein mobiles Telekommunikationsendgerät wie beispielsweise ein Handy oder Smartphone. Insbesondere kann die Eingabeeinrichtung ein Bestandteil des Endgeräts sein. Alternativ oder zusätzlich ist es denkbar, dass die elektronische Anzeige und/oder die elektronische Recheneinrichtung und/oder die weitere elektronische Recheneinrichtung ein Bestandteil des Endgeräts ist. Somit kann beispielsweise die Information, die den ermittelten Zustand charakterisiert, auf dem Bildschirm des mobilen Endgeräts angezeigt werden.

Beispielsweise werden Zustandsdaten, die den ermittelten Zustand charakterisieren, insbesondere leitungslos und dabei beispielsweise per Funk, insbesondere über eine Bluetooth-Verbindung, von der Erfassungseinrichtung bereitgestellt und von dem Endgerät empfangen, sodass beispielsweise auf dem Bildschirm in Abhängigkeit von den empfangenen Zustandsdaten die Information angezeigt werden kann. Die Information kann wenigstens ein oder mehrere Zahlen, insbesondere wenigstens eine oder mehrere Zahlenfolgen, und/oder wenigstens einen oder mehrere Buchstaben und/oder wenigstens ein oder mehrere Symbole umfassen.

Die Erfassungseinrichtung ist oder umfasst beispielsweise wenigstens einen Fluidmesser, insbesondere einen Gasinhaltsmesser, mittels welchem eine Größe erfassbar ist, die eine in wenigstens einem Behältnis, insbesondere in einem Fluidtank und ganz insbesondere einem Gastank, des Fahrzeugs aufgenommene Menge eines Fluids, insbesondere eines Gases, charakterisiert. Somit ist oder umfasst der genannte Teil des Fahrzeug das Behältnis, und der Zustand ist oder umfasst die Menge des Fluids. Der Gastank kann eine Gasflasche, insbesondere eine Flüssiggasflache sein. Die in dem Behältnis aufgenommene Menge des Fluids wird auch als Füllstand bezeichnet. Beispielsweise ist der Fluidmesser dazu ausgebildet, den Füllstand mittels Schall, insbesondere Ultraschall, zu erfassen, das heißt zu messen. Ferner ist es denkbar, dass die Größe ein Gewicht des Fluidtanks ist, sodass beispielsweise der Fluidmesser dazu ausgebildet ist, das Behältnis zu wiegen und dadurch als die die Menge charakterisierende Größe das Gewicht des Fluidtanks zu messen.

Ferner ist es denkbar, dass die Messeinrichtung ein Drucksensor ist oder wenigstens einen Drucksensor umfasst, wobei mittels des Drucksensors ein in einem Aufnahmeraum des Fahrzeugs herrschender Druck erfassbar ist. Somit ist oder umfasst der genannte Teil den Aufnahmeraum. Somit ist oder umfasst der Zustand den Druck. Beispielsweise ist der Aufnahmeraum zumindest teilweise durch einen Reifen eines Fahrzeugrads des Fahrzeugs begrenzt, welches in Fahrzeughochrichtung nach unten hin über das Fahrzeugrad, welches ein Bodenkontaktelement des Fahrzeugs ist, an einem Boden abstützbar oder abgestützt ist. Somit handelt es sich beispielsweise bei dem Druck um einen in dem Reifen herrschenden Reifendruck, sodass der Drucksensor beispielsweise ein Reifendrucksensor ist.

Ferner ist es denkbar, dass die Messeinrichtung ein Spannungsmesser ist oder wenigstens einen Spannungsmesser umfasst, wobei mittels des Spannungsmesser eine elektrische Spannung eines Bauteils des Fahrzeugs erfassbar ist. Bei dem Bauteil handelt es sich beispielsweise um eine Batterie zum, insbesondere elektrochemischen, Speichern von elektrischer Energie. Somit ist der Zustand die elektrische Spannung, und der genannte Teil des Fahrzeugs ist oder umfasst die Batterie.

Alternativ oder zusätzlich ist oder umfasst beispielsweise die Messeinrichtung eine Bestimmungseinrichtung, mittels welcher wenigstens eine, insbesondere aktuelle, Position des Fahrzeugs auf der Erde, insbesondere satellitengestützt und somit beispielsweise per GPS, ermittelt werden kann. Die Bestimmungseinrichtung wird beispielsweise auch als GPS-Tracker bezeichnet. Somit ist oder umfasst der Zustand die Position.

Beispielsweise ist die Erfassungseinrichtung ein vollbusfähiges System oder ein Bestandteil eines vollbusfähigen Systems und ermöglicht das Erfassen des Zustands.

Alternativ oder zusätzlich ist oder umfasst beispielsweise die Messeinrichtung wenigstens einen Temperatursensor, mittels welchem wenigstens eine Temperatur zumindest eines Bereiches des Fahrzeugs, beispielsweise eines Innenraums des Fahrzeugs, erfassbar ist. Somit ist oder umfasst der Zustand die Temperatur. Im Innenraum des Fahrzeugs können sich beispielsweise Personen aufhalten.

Ferner ist es denkbar, dass die Erfassungseinrichtung dazu ausgebildet ist, als den Zustand des Fahrzeugs wenigstens einen Verbrauch eines beispielsweise flüssigen oder gasförmigen Mediums, welches in einer Aufnahme des Fahrzeugs aufgenommen ist, vorauszusagen, das heißt zu prognostizieren, insbesondere in Abhängigkeit von einem vergangenen, mittels der Erfassungseinrichtung erfassten Verbrauch des Mediums. Unter dem Verbrauch des Mediums ist insbesondere eine Entnahme oder ein Abführen des Mediums aus der Aufnahme zu verstehen. Insbesondere kann es sich bei dem Medium um das zuvor genannte Fluid handeln. Das Prognostizieren des Verbrauchs wird auch als Verbrauchprognose bezeichnet, welche mittels der Erfassungseinrichtung durchführbar ist. Somit ist oder umfasst der Zustand den prognostizierten Verbrauch, mithin die Verbrauchsprognose.

Ein vierter Aspekt der Erfindung betrifft ein Verfahren zum Betreiben einer Waage zum Ermitteln eines Gewichts eines Fahrzeugs. Bei dem vierten Aspekt wird mittels einer Eingabeeinrichtung eine durch eine Person bewirkte Freigabeeingabe in die Eingabeeinrichtung erfasst. Bei dem vierten Aspekt wird mittels einer elektronischen Recheneinrichtung die Freigabeeingabe mit einer vorgegebenen Referenzeingabe verglichen wird. Bei dem vierten Aspekt wird, insbesondere mittels der elektronischen Recheneinrichtung oder mittels einer weiteren elektronischen Recheneinrichtung, die Waage für das Ermitteln des Gewichts des Fahrzeugs dann und nur dann freigegeben wird, wenn der Vergleich der Freigabeeingabe mit der Referenzeingabe ergibt, dass die Freigabeeingabe mit der Referenzeingabe übereinstimmt. Alternativ oder zusätzlich wird bei dem vierten Aspekt eine zum Anzeigen wenigstens einer das ermittelte Gewicht charakterisierenden Information ausgebildete, auch als Bildschirm bezeichnete, elektronische Anzeige für das Anzeigen der Information dann und nur dann freigegeben wird, wenn der Vergleich der Freigabeeingabe mit der Referenzeingabe ergibt, dass die Freigabeeingabe mit der Referenzeingabe übereinstimmt. Vorteile und vorteilhafte Ausgestaltungen des ersten Aspekts, des zweiten Aspekts und des dritten Aspekts der Erfindung sind als Vorteile und vorteilhafte Ausgestaltungen des vierten Aspekts der Erfindung anzusehen und umgekehrt, wobei insbesondere im Hinblick auf die Beschreibung des ersten und zweiten und dritten Aspekts an die Stelle des Hilfsantriebs und an die Stelle der Erfassungseinrichtung die Waage treten kann und umgekehrt.

Beispielsweise werden Wiegedaten, die das ermittelte Gewicht charakterisieren, insbesondere leitungslos und dabei beispielsweise per Funk, insbesondere über eine Bluetooth-Verbindung, von der Waage bereitgestellt und von einem mobilen Endgerät, welches beispielsweise als mobiles Funkgerät wie beispielsweise als Mobiltelefon ausgebildet ist, empfangen, sodass beispielsweise auf dem Bildschirm des Endgeräts in Abhängigkeit von den empfangenen Wiegedaten die Information angezeigt werden kann. Die Information kann wenigstens ein oder mehrere Zahlen, insbesondere wenigstens eine oder mehrere Zahlenfolgen, und/oder wenigstens einen oder mehrere Buchstaben und/oder wenigstens ein oder mehrere Symbole umfassen.

Ein fünfter Aspekt der Erfindung betrifft ein Verfahren zum Aktualisieren eines zum Betreiben eines Hilfsantriebs, insbesondere gemäß dem ersten und zweiten Aspekt der Erfindung, für einen Anhänger ausgebildeten und in einem elektronischen Datenspeicher des Hilfsantriebs gespeicherten Computerprogramms, bei welchem mittels einer Eingabeeinrichtung eine durch eine Person bewirkte Freigabeeingabe in die Eingabeeinrichtung erfasst wird. Bei dem fünften Aspekt der Erfindung wird mittels einer elektronischen Recheneinrichtung die Freigabeeingabe mit einer vorgegebenen Referenzeingabe verglichen. Bei dem fünften Aspekt der Erfindung wird, insbesondere mittels der elektronischen Recheneinrichtung oder einer weiteren elektronischen Recheneinrichtung, das Aktualisieren des Computerprogramms dann und nur dann freigegeben und durchgeführt wird, wenn der Vergleich der Freigabeeingabe mit der Referenzeingabe ergibt, dass die Freigabeeingabe mit der Referenzeingabe übereinstimmt. Vorteile und vorteilhafte Ausgestaltungen des ersten Aspekts, des zweiten Aspekts, des dritten Aspekts und des vierten Aspekts der Erfindung sind als Vorteile und vorteilhafte Ausgestaltungen des fünften Aspekts der Erfindung anzusehen und umgekehrt, wobei insbesondere im Hinblick auf die Beschreibung des ersten und zweiten und dritten und vierten Aspekts an die Stelle des Hilfsantriebs und an die Stelle der Erfassungseinrichtung und an die Stelle der Waage das Aktualisieren des Datenspeichers treten kann und umgekehrt.

Ein sechster Aspekt der Erfindung betrifft ein Verfahren zum Auslesen eines elektronischen Fehlerspeichers eines Anhängers und/oder eines Hilfsantriebs für einen Anhänger, bei welchem mittels einer Eingabeeinrichtung eine durch eine Person bewirkte Freigabeeingabe in die Eingabeeinrichtung erfasst wird. Bei dem sechsten Aspekt wird mittels einer elektronischen Recheneinrichtung die Freigabeeingabe mit einer vorgegebenen Referenzeingabe verglichen. Bei dem sechsten Aspekt wird, insbesonderemittels der elektronischen Recheneinrichtung oder einer weiteren elektronischen Recheneinrichtung, das Auslesen des Fehlerspeichers dann und nur dann freigegeben und durchgeführt wird, wenn der Vergleich der Freigabeeingabe mit der Referenzeingabe ergibt, dass die Freigabeeingabe mit der Referenzeingabe übereinstimmt. Vorteile und vorteilhafte Ausgestaltungen des ersten Aspekts, des zweiten Aspekts, des dritten Aspekts, des vierten Aspekts und des fünften Aspekts der Erfindung sind als Vorteile und vorteilhafte Ausgestaltungen des sechsten Aspekts der Erfindung anzusehen und umgekehrt, wobei insbesondere im Hinblick auf die Beschreibung des ersten und zweiten und dritten und vierten und fünften Aspekts an die Stelle des Hilfsantriebs und an die Stelle der Erfassungseinrichtung und an die Stelle der Waage und an die Stelle des Aktualisierens des Datenspeichers das Auslesen des insbesondere elektrischen oder elektronischen Fehlerspeichers, welcher beispielsweise Bestandteil des zuvor genannten Datenspeichers sein kann, treten kann und umgekehrt.

Ein siebter Aspekt der Erfindung betrifft ein Verfahren zum Fernsteuern wenigstens einer auch als Fernsteuerkomponente bezeichnete Komponente eines Anhängers von außerhalb des Anhängers, bei welchem mittels einer insbesondere elektrischen oder elektronischen Eingabeeinrichtung eine durch eine Person bewirkte Freigabeeingabe in die Eingabeeinrichtung erfasst wird. Bei dem sechsten Aspekt der Erfindung wird mittels einer elektronischen Recheneinrichtung die Freigabeeingabe mit einer vorgegebenen Referenzeingabe verglichen. Bei dem sechsten Aspekt wird, insbesondere mittels der elektronischen Recheneinrichtung oder einer weiteren elektronischen Recheneinrichtung, die Fernsteuerkomponente für das Fernsteuern der Fernsteuerkomponente dann und nur dann freigegeben wird, wenn der Vergleich der Freigabeeingabe mit der Referenzeingabe ergibt, dass die Freigabeeingabe mit der Referenzeingabe übereinstimmt. Vorteile und vorteilhafte Ausgestaltungen des ersten Aspekts, des zweiten Aspekts, des dritten Aspekts, des vierten Aspekts, des fünften Aspekts und des sechsten Aspekts der Erfindung sind als Vorteile und vorteilhafte Ausgestaltungen des siebten Aspekts der Erfindung anzusehen und umgekehrt, wobei insbesondere im Hinblick auf die Beschreibung des ersten und zweiten und dritten und vierten und fünften Aspekts und sechsten Aspekts an die Stelle des Hilfsantriebs und an die Stelle der Erfassungseinrichtung und an die Stelle der Waage und an die Stelle des Aktualisierens des Datenspeichers und an die Stelle des Auslesen des Fehlerspeichers die Fernsteuerkomponente oder das Fernsteuern der Fernsteuerkomponente treten kann und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines als Wohnwagen ausgebildeten Anhängers, welcher mittels eines Hilfsantriebs antreibbar ist;
- Fig. 2: eine schematische Vorderansicht eines mobilen Endgeräts zum Entsperren und Bedienen des Hilfsantriebs; und
- Fig. 3: eine weitere schematische Vorderansicht des mobilen Endgeräts.

In den Figuren sind gleiche oder funktionsgleiche Elemente mit gleichen Bezugszeichen versehen.

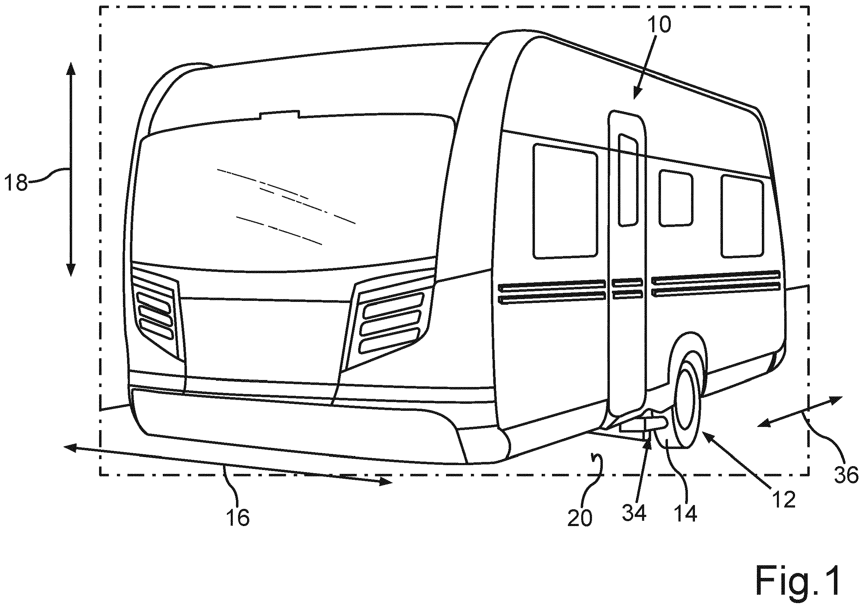

Fig. 1 zeigt in einer schematischen Perspektivansicht einen Anhänger 10, welcher bei dem in Fig. 1 gezeigten Ausführungsbeispiel als ein Wohnwagen ausgebildet ist. Der Anhänger 10 weist ein in Fig. 1 nicht näher erkennbares Fahrgestell auf, welches beispielsweise als ein Rahmen ausgebildet ist. Bei dem in Fig. 1 gezeigten Ausführungsbeispiel weist der Anhänger 10, insbesondere genau, eine einfach auch als Achse bezeichnete Fahrzeugachse 12 auf, welche wenigstens oder vorliegend genau zwei Bodenkontaktelemente 14 aufweist. Die Bodenkontaktelemente 14 sind auf in Fahrzeugquerrichtung des Anhängers einander gegenüberliegenden Seiten des Anhängers 10 angeordnet, wobei die Fahrzeugquerrichtung des Anhängers 10 durch einen Doppelpfeil 16 veranschaulicht ist. Die Bodenkontaktelemente 14 sind bei dem in Fig. 1 gezeigten Ausführungsbeispiel als Fahrzeugräder ausgebildet, welche auch einfach als Räder bezeichnet werden und drehbar an dem Fahrgestell gehalten sind. Der Anhänger 10 ist entlang seiner durch einen Doppelpfeil 18 veranschaulichten, einfach auch als Hochrichtung bezeichneten Fahrzeughochrichtung nach unten hin über die Bodenkontaktelemente 14 an einem Boden 20 abstützbar oder abgestützt. Wird der Anhänger 10 beispielsweise mittels eines Zugfahrzeugs entlang des Bodens 20 gefahren, während der Anhänger 10 entlang seiner Fahrzeughochrichtung nach unten hin über die Bodenkontaktelemente 14 an dem Boden 20 abgestützt ist, so rollen die Bodenkontaktelemente 14, insbesondere direkt, an dem Boden 20 ab.

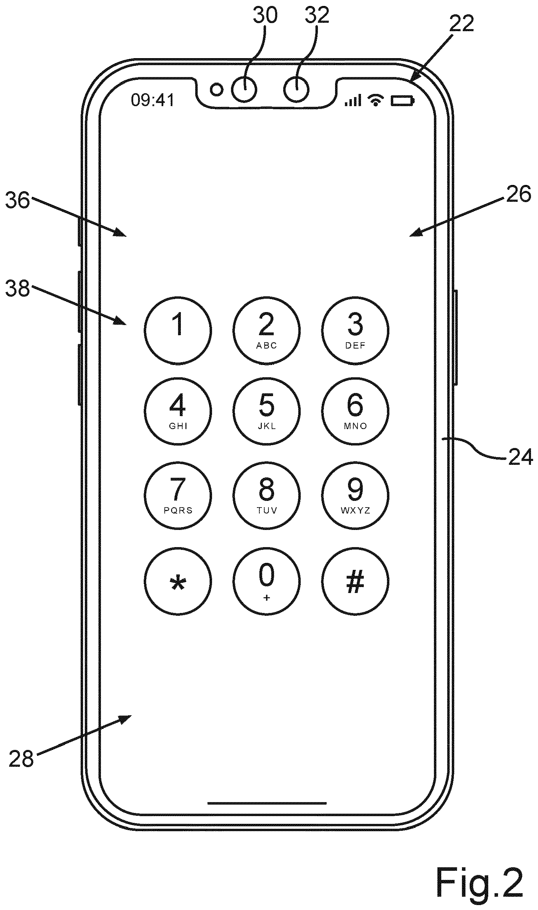

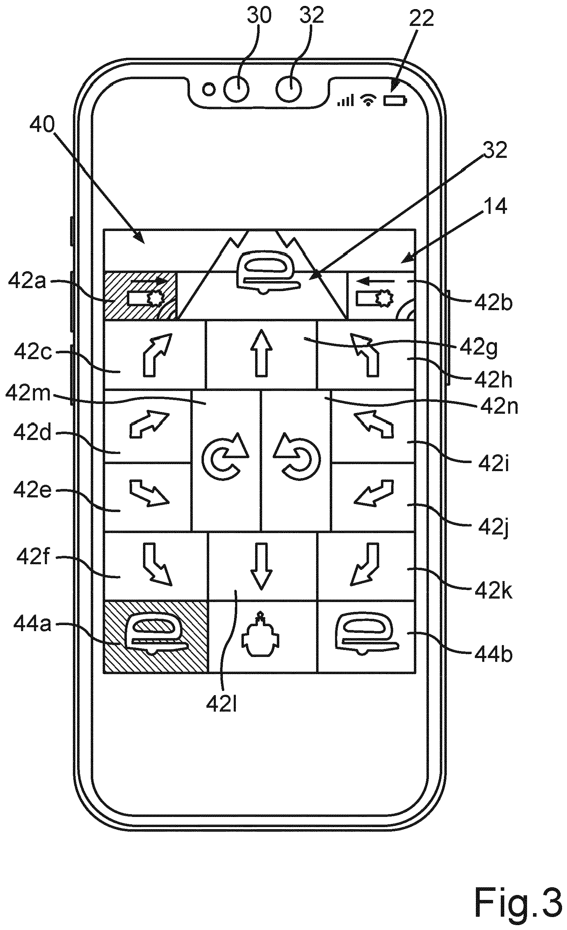

Fig. 2 und 3 zeigen in einer jeweiligen, schematischen Vorderansicht ein mobiles Endgerät 22, welches vorliegend als mobiles Telekommunikationsendgerät ausgebildet ist. Das mobile Endgerät 22 ist vorliegend als ein Smartphone und somit zum Aufbauen einer Telefonverbindung über Funktechnik ausgebildet. Mit anderen Worten weist das mobile Endgerät 22 ein Mobilfunkmodul auf, mittels welchem das mobile Endgerät 22 leitungslos und somit per Funk, mithin Funktechnik mit einem Mobilfunknetz verbunden oder verbindbar ist. Dabei ist das mobile Endgerät 22 dazu ausgebildet, in einem Zustand, in welchem das mobile Endgerät 22 mittels des Mobilfunkmoduls leitungslos mit dem Mobilfunknetz verbunden ist, über das Mobilfunknetz eine Sprachkommunikation mit einem zweiten mobilen Endgerät durchzuführen.

Das mobile Endgerät 22 weist ein Gehäuse 24 sowie eine elektrische oder elektronische Anzeige 26 auf, welche auch als Bildschirm bezeichnet wird. Bei dem in Fig. 2 und 3 gezeigten Ausführungsbeispiel ist die Anzeige 26 als ein berührungsempfindlicher Bildschirm ausgebildet. Hierbei umfasst das mobile Endgerät 22 eine Eingabeeinrichtung 28, mittels welcher eine Person Eingaben in die Eingabeeinrichtung 28 und somit in das mobile Endgerät 22 vornehmen, das heißt durchführen kann. Dabei umfasst die Eingabeeinrichtung 28 den berührungsempfindlichen Bildschirm (Anzeige 26).

Das mobile Endgerät 22 weist beispielsweise wenigstens einen Lautsprecher 30 zum Wiedergeben von Tönen auf. Fernern weist beispielsweise das mobile Endgerät 22 wenigstens ein Mikrofon 32 zum Erfassen von Tönen auf. Somit kann beispielsweise die Person über den Lautsprecher 30 und das Mikrofon 32 die Sprachkommunikation insbesondere in Form eines Telefongesprächs durchführen.

Bei dem in Fig. 1 gezeigten Ausführungsbeispiel ist der Anhänger 10 mit einem Hilfsantrieb 34 ausgestattet, welcher auch als Rangierantrieb bezeichnet wird. Der Hilfsantrieb 34 ist zumindest mittelbar, insbesondere direkt, an dem Fahrgestell gehalten und weist beispielsweise eine Antriebseinheit mit wenigstens oder genau zwei Motoren, insbesondere Elektromotoren, auf. Ferner weist der Hilfsantrieb wenigstens ein Antriebselement insbesondere in Form einer Walze auf, welche auch als Antriebswalze bezeichnet wird. Insbesondere ist es vorgesehen, dass dem jeweiligen Bodenkontaktelement 14 ein jeweiliges Antriebselement des Hilfsantriebs 34 zugeordnet ist, sodass beispielsweise der Hilfsantrieb 34 wenigstens oder genau zwei Antriebselemente aufweist. Insbesondere kann beispielsweise das jeweiligen Antriebselement als eine jeweilige Walze ausgebildet sein, welche auch als Antriebswalze bezeichnet wird. Beispielsweise kann eine erste der Antriebswalzen mittels eines ersten der Motoren angetrieben werden, beispielsweise kann eine zweite der Antriebswalzen mittels eines zweiten der Motoren angetrieben werden. Die jeweilige Antriebswalze kann beispielsweise in einfach auch als Längsrichtung bezeichneter Fahrzeuglängsrichtung des Anhängers 10, dessen Fahrzeuglängsrichtung durch einen Doppelpfeil 36 veranschaulicht ist, zwischen einer jeweiligen Gebrauchsstellung und einer jeweiligen Nicht-Gebrauchsstellung, insbesondere translatorisch, bewegt werden. In der Gebrauchsstellung befindet sich die jeweilige Antriebswalze in Kontakt beziehungsweise in Stützanlage mit dem jeweiligen, zugeordneten Bodenkontaktelement 14, wobei die jeweilige Antriebswalze in Kontakt mit dem jeweiligen, zugeordneten Bodenkontaktelement 14 gehalten und dabei beispielsweise gegen das jeweilige, zugeordnete Bodenkontaktelement 14 gedrückt wird. Somit wirkt die jeweilige Antriebswalze in der jeweiligen Gebrauchsstellung mit dem jeweiligen Bodenkontaktelement 14 zusammen, welchem die jeweilige Antriebswalze zugeordnet ist. In der jeweiligen Nicht-Gebrauchsstellung ist beispielsweise die jeweilige Antriebswalze von dem jeweiligen, zugeordneten Bodenkontaktelement 14 beabstandet. Wird die jeweilige Antriebswalze mittels des jeweiligen, zugeordneten Motors beispielsweise angetrieben, während sich die jeweilige Antriebswalze in der jeweiligen Gebrauchsstellung befindet, so wird dadurch das jeweilige Bodenkontaktelement 14, welchem die jeweilige Antriebswalze zugeordnet ist, angetrieben, das heißt relativ zu dem Fahrgestell gedreht, wodurch der Anhänger 10 angetrieben beziehungsweise bewegt und somit rangiert wird. Dadurch ist es möglich, den Anhänger 10 zu bewegen und insbesondere zu rangieren, wenn der Anhänger 10 nicht mit einem Zugfahrzeug gekoppelt ist. Ein solcher Zustand, in welchem der Anhänger 10 nicht mit einem Zugfahrzeug gekoppelt ist, wird auch als abgekoppelter Zustand bezeichnet. In Fig. 1 befindet sich der Anhänger 10 in seinem abgekoppelten Zustand. In der Nicht-Gebrauchsstellung ist die jeweilige Antriebswalze von dem jeweiligen, zugeordneten Bodenkontaktelement 14 (Fahrzeugrad) beabstandet, sodass die jeweilige Antriebswalze nicht mit jeweiligen Bodenkontaktelement 14 zusammenwirkt. Würde die Antriebswalze in der Nicht-Gebrauchsstellung mittels des jeweiligen Motors angetrieben werden, so würde dann das jeweilige, zugeordnete Bodenkontaktelement 14 nicht angetrieben werden, da in der Nicht-Gebrauchsstellung die Antriebswalze nicht mit dem jeweiligen, zugeordneten Bodenkontaktelement 14 zusammenwirkt.

Im Folgenden wird ein Verfahren zum Betreiben des Hilfsantriebs 34 beschrieben, wobei in dem Verfahren das mobile Endgerät 22 verwendet wird. Bei dem Verfahren wird mittels der elektronischen Eingabeeinrichtung 28, insbesondere mittels der Anzeige 26, eine durch eine Person bewirkte Freigabeeingabe in die Eingabeeinrichtung 28, insbesondere die Anzeige 26, erfasst. Mittels einer elektronischen Recheneinrichtung wird die erfasste Freigabeeingabe mit einer vorgegebenen Referenzeingabe verglichen. Beispielsweise wird als die elektronische Recheneinrichtung eine elektronische Recheneinrichtung des mobilen Endgeräts 22 verwendet. Mittels der elektronischen Recheneinrichtung wird der Hilfsantrieb 34 für ein mittels des Hilfsantriebs 34 bewirkbares Antreiben des Anhängers 10 dann und nur dann freigegeben, wenn der Vergleich der Freigabeeinrichtung mit der Referenzeingabe ergibt, das heißt wenn die elektronische Recheneinrichtung durch Vergleichen der Freigabeeingabe mit der Referenzeingabe ermittelt, dass die Freigabeeingabe mit der Referenzeingabe übereinstimmt, mithin der Referenzeingabe entspricht. Damit beispielsweise die Person die Freigabeeingabe in die Eingabeeinrichtung 28 und somit in das mobile Endgerät 22 eingeben kann, stellt beispielsweise das mobile Endgerät 22 eine in Fig. 2 gezeigte, erste graphische Benutzeroberfläche 36 bereit, mittels welcher die Person die Freigabeeingabe durchführen, das heißt in die Eingabeeinrichtung 28 eingeben kann. Die erste graphische Benutzeroberfläche 36 umfasst mehrere Bedienelemente 38, welche als Bedienflächen in jeweiligen Bereichen der Anzeige 26 angezeigt werden. Aus Fig. 2 ist erkennbar, dass die jeweilige Bedienfläche, mithin das jeweilige Bedienelement mit wenigstens einer jeweiligen Beschriftung versehen ist, welche vorliegend beispielsweise wenigstens oder genau eine arabische Zahl aufweist. Der jeweilige Bereich, in welchem die jeweilige Bedienfläche beziehungsweise das jeweilige Bedienelement angezeigt wird, wird auch als jeweiliger Bedienbereich bezeichnet. Das jeweilige, in dem jeweiligen Bedienbereich der Anzeige 26 angezeigte Bedienelement kann durch Berühren des jeweiligen Bedienbereichs, in welchem das jeweilige Bedienelement angeordnet ist, bedient werden. Mit anderen Worten kann die Person das jeweilige Bedienelement dadurch bedienen und somit betätigen, dass die Person den jeweiligen Bedienbereich berührt, auf welchem das jeweilige Bedienelement, mithin die jeweilige Bedienfläche, angeordnet ist, das heißt angezeigt wird.

Bei dem in den Figuren gezeigten Ausführungsbeispiel umfasst die Referenzeingabe eine Folge von beispielsweise genau vier alphanumerischen Zeichen, vorliegend in Form von arabischen Zahlen. Die Person kann somit beispielsweise durch sukzessives, viermaliges Berühren der Anzeige 26 eine Zeichenfolge in die Eingabeeinrichtung 28 eingeben, wobei die Zeichenfolge beispielsweise vier der auf der Anzeige 26 gemäß Fig. 2 angezeigten, arabischen Zahlen umfasst. Diese in die Eingabeeinrichtung 28 eingegebene Zeichenfolge ist beispielsweise die Freigabeeingabe. Somit umfasst oder ist beispielsweise die Referenzeingabe eine Referenzzeichenfolge aus insbesondere genau vier arabischen Zahlen. Entspricht die Zeichenfolge, mithin die Freigabeeingabe der Referenzzeichenfolge und somit der Referenzeingabe, so wird dann und erst dann der Hilfsantrieb 34 für ein Antreiben des Anhängers 10 freigegeben. Die Referenzzeichenfolge ist beispielsweise 0000. Weicht die Freigabeeingabe, mithin die Zeichenfolge von dieser Referenzzeichenfolge ab, so bleibt der Hilfsantrieb 34 für ein Antreiben des Anhängers 10 gesperrt, mithin wird ein durch den Hilfsantrieb 34 bewirkbares Antreiben des Anhängers 10 unterbunden. Dann und erst dann, wenn die Person 0000 als die Freigabeeingabe in die Eingabeeinrichtung 28 eingibt, wird der Hilfsantrieb 34 für ein Antreiben des Anhängers 10 freigegeben, mithin wird der Hilfsantrieb 34 entsperrt.

Das Freigeben des Hilfsantriebs 34 umfasst beispielsweise, dass der Hilfsantrieb 34 für ein mittels des mobilen Endgeräts 22 erfolgendes, leitungsloses Bedienen der Motoren des Hilfsantriebs 34 und ein aus dem Bedienen der Motoren resultierendes, durch die Motoren bewirktes Antreiben der Bodenkontaktelemente 14 und somit des Anhängers 10 freigegeben wird. Ermittelt beispielsweise die elektronische Recheneinrichtung, dass die Freigabeeingabe der Referenzeingabe entspricht, so wird beispielsweise auf der Anzeige 26 des mobilen Endgeräts 22 eine in Fig. 3 gezeigte, von der ersten graphischen Benutzeroberfläche 36 unterschiedliche zweite graphische Benutzeroberfläche 40 angezeigt. Die graphische Benutzeroberfläche 40 umfasst mehrere Funktionsbedienelemente 42a-n, welche jeweiligen, weiteren Bereichen der Anzeige 26 angezeigt werden, wobei die weiteren Bereiche auch als weitere Bedienbereiche bezeichnet werden. Mittels des jeweiligen Funktionsbedienelements 42a-n kann jeweils wenigstens oder genau eine Funktion des Hilfsantriebs 34 bewirkt werden, insbesondere dadurch, dass die Person den jeweiligen, weiteren Bedienbereich berührt, in welchem das jeweilige Funktionsbedienelement 42a-n angeordnet ist. Die Funktionsbedienelemente 42a, b dienen beispielsweise dazu, die jeweilige, dem jeweiligen Bodenkontaktelement 14 zugeordnete Antriebswalze einzuschwenken und auszuschwenken. Unter dem Einschwenken ist die Bewegung der jeweiligen Antriebswalze aus der jeweiligen Nicht-Gebrauchsstellung in die jeweilige Gebrauchsstellung zu verstehen, wobei unter dem Ausschwenken die umgekehrte Bewegung der Antriebswalze aus der jeweiligen Gebrauchsstellung in die jeweilige Nicht-Gebrauchsstellung zu verstehen ist. Über die anderen Funktionsbedienelemente 42c-n können beispielsweise unterschiedliche Bewegungen beziehungsweise Fahr- oder Rangiermanöver des Anhängers 10 über den Hilfsantrieb 34 bewirkt werden. Mittels des Funktionsbedienelements 42g wird beispielsweise eine einfache Vorwärtsfahrt des Anhängers 10 bewirkt, ohne dass sich der Anhänger 10 dreht beziehungsweise eine Kurve fährt. Demzufolge wird beispielsweise über das Funktionsbedienelement 421 eine einfache Rückwärtsfahrt des Anhängers 10 bewirkt, ohne dass dieser eine Kurve fährt. Die Funktionsbedienelemente 42c-f und 42h-k dienen beispielsweise dazu, Kurvenfahrten des Anhängers 10 nach vorne beziehungsweise nach hinten zu bewirken, wobei dann der Anhänger 10 beispielsweise eine jeweilige Kurve mit unterschiedlichen Kurvenradien fährt. Ferner dienen beispielsweise die Funktionsbedienelemente 42m-n zum Bewirken jeweiliger Drehfunktionen des Hilfsantriebs 34 und somit des Anhängers 10.

Somit kann mittels des jeweiligen Funktionsbedienelements 42a-n ein jeweiliges Fahrmanöver des Anhängers 10 über den Hilfsantrieb 34 bewirkt werden. Aus Fig. 3 ist dabei erkennbar, dass das jeweilige Funktionsbedienelement 42a-n wenigstens einen jeweiligen Richtungspfeil aufweist, mittels welchem das jeweilige Fahrmanöver, insbesondere eine Richtung beziehungsweise Fahrtrichtung des Anhängers 10 bei dem jeweiligen Fahrmanöver, veranschaulicht wird. Dabei sind die Richtungspfeile der Funktionsbedienelemente 42c-f und 42h-k unterschiedlich gekrümmt, um dadurch die zuvor genannten, unterschiedlichen Kurvenradien zu veranschaulichen. Wie durch die Richtungspfeile der Funktionsbedienelemente 42m-n veranschaulicht ist, ist im Rahmen der jeweiligen Drehfunktion eine Drehung auf der Stelle zu verstehen. Mit anderen Worten wird mittels der jeweiligen Drehfunktion über den Hilfsantrieb 34 eine Drehung des Anhängers 10 um dessen Hochrichtung und insbesondere auf der Stelle bewirkt, während eine translatorische Bewegung des Anhängers 10 nach vorne oder hinten zumindest im Wesentlichen unterbleibt. Dadurch kann der Anhänger 10 beispielsweise auf sehr engem Raum gedreht beziehungsweise gewendet werden. Dies ist insbesondere bei einem einachsigen Anhänger vorteilhaft, wobei der Anhänger 10 genau eine Achse, insbesondere in Form der Fahrzeugachse 12 aufweist. Mittels der Funktionsbedienelemente 42c-h, f und k kann die Person beispielsweise als das jeweilige Fahrmanöver eine Rangierfunktion bewirken, bei welcher der Hilfsantrieb 34 eines der Bodenkontaktelemente 14 in eine Drehrichtung mit einer ersten Drehzahl und das dem einen Bodenkontaktelement 14 in Fahrzeugquerrichtung des Anhängers 10 gegenüberliegende, andere Bodenkontaktelement 14 in die Drehrichtung mit einer von der ersten Drehzahl unterschiedlichen, zweiten Drehzahl antreibt, welche größer als null ist. Dabei treibt der Hilfsantrieb 34 beispielsweise das kurvenäußere Bodenkontaktelement 14 mit der ersten Drehzahl und das kurveninnere Bodenkontaktelement 14 mit der zweiten Drehzahl an, welche geringer als die erste Drehzahl und größer als null ist, wobei die erste Drehzahl größer als null ist.

Ferner umfasst beispielsweise die zweite graphische Benutzeroberfläche 40 zwei insbesondere voneinander unterschiedliche und von den Funktionsbedienelementen 42a-n unterschiedliche Sicherheitsbedienelemente 44a, b auf. Die Funktionsbedienelemente 42a-n und die Sicherheitsbedienelemente 44a, b sind nicht etwa mechanische Bedienelemente, sondern Bedienflächen, die in jeweiligen Bereichen der Anzeige 26 angezeigt werden. Es ist erkennbar, dass die ersten Bedienbereiche und die weiteren Bedienbereiche, mithin die Bedienbereiche, in welchen die Bedienelemente 38, die Funktionsbedienelemente 42a-n und die Sicherheitsbedienelemente 44a, b angezeigt werden, nebeneinander angeordnet sind. Dabei werden die Funktionsbedienelemente 42a-n und die Sicherheitsbedienelemente 44a, b gleichzeitig angezeigt, und die Bedienelemente 38 werden gleichzeitig angezeigt.

Um eine besonders hohe Sicherheit realisieren zu können, sind die Funktionsbedienelemente 42a-n in Abhängigkeit von wenigstens einer durch die Person bewirkten Betätigung des jeweiligen Sicherheitsbedienelements 44a, b für das Bewirken der jeweiligen Funktion freigebbar, wobei die Person das jeweilige Funktionsbedienelement 42a-n und das jeweilige Sicherheitsbedienelement 44a, b derart bedienen und dadurch betätigen kann, dass die Person den jeweiligen Bedienbereich, in welchem das jeweilige Funktionsbedienelement 42a-n beziehungsweise das jeweilige Sicherheitsbedienelement 44a, b angeordnet ist, berührt. Mit anderen Worten ist es beispielsweise bei dem Verfahren vorgesehen, dass das jeweilige Funktionsbedienelement 42a-n in Abhängigkeit von wenigstens einer durch die Person bewirkten Betätigung des Sicherheitsbedienelements 44a, b für das Bewirken der jeweiligen Funktion freigegeben wird. Um die jeweilige Funktion, das heißt vorliegend das jeweilige Fahrmanöver des Anhängers 10 mittels des Hilfsantriebs 34 über das mobile Endgerät 22 tatsächlich zu bewirken, muss somit die Person nicht nur das jeweils entsprechende Funktionsbedienelement 42a-n, sondern auch wenigstens eines der Sicherheitsbedienelemente 44a, b betätigen. Bei dem Verfahren ist oder wird das mobile Endgerät 22 mit einem beispielsweise an dem Anhänger 10 angeordneten Empfangselement des Hilfsantriebs 34 über eine leitungslose, mithin drahtlose Kommunikationsverbindung verbunden. Hierfür umfasst beispielsweise das mobile Endgerät 22 ein erstes Kommunikationsmodul, wobei der Hilfsantrieb 34 ein in den Figuren nicht dargestelltes, zweites Kommunikationsmodul insbesondere in Form des genannten Empfangselements umfasst. Über diese Kommunikationsmodule wird die leitungslose Kommunikationsverbindung zwischen dem mobilen Endgerät 22 und dem Hilfsantrieb 34 aufgebaut, sodass beispielsweise das mobile Endgerät 22 über das erste Kommunikationsmodul Daten an das zweite Kommunikationsmodul übermitteln kann, und wobei das zweite Kommunikationsmodul die von dem mobilen Endgerät 22 übermittelten Daten empfangen kann. Alternativ oder zusätzlich ist es denkbar, dass der Hilfsantrieb 34 über das zweite Kommunikationsmodul Daten an das erste Kommunikationsmodul und somit an das mobile Endgerät 22 übermitteln kann, wobei das mobile Endgerät 22 über das erste Kommunikationsmodul die vom Hilfsantrieb 34 beziehungsweise das zweite Kommunikationsmodul übermittelten Daten empfangen kann. Die Motoren werden beispielsweise in Abhängigkeit von den von dem ersten Kommunikationsmodul bereitgestellten und mittels des zweiten Kommunikationsmoduls empfangenen, auch als Ansteuerdaten bezeichneten Daten betrieben, insbesondere gesteuert oder geregelt, um hierdurch die Bodenkontaktelemente 14 und somit den Anhänger 10 insbesondere entsprechend dem Fahrmanöver anzutreiben. Dadurch kann der Hilfsantrieb 34 besonders komfortabel bedient werden.

## Patentansprüche

1. Verfahren zum Betreiben eines Hilfsantriebs (34) für einen Anhänger (10), bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- der Hilfsantrieb (34) für ein Antreiben des Anhängers (10) dann und nur dann freigegeben wird, wenn der Vergleich der Freigabeeingabe mit der Referenzeingabe ergibt, dass die Freigabeeingabe mit der Referenzeingabe übereinstimmt.

2. Verfahren nach Anspruch 1,
**dadurch gekennzeichnet, dass**
die Referenzeingabe eine Folge von alphanumerischen Zeichen umfasst.

3. Verfahren nach Anspruch 1 oder 2,
**dadurch gekennzeichnet, dass**
die Referenzeingabe eine Folge von Buchstaben und/oder Zahlen und/oder Symbolen umfasst.

4. Verfahren nach einem der vorhergehenden Ansprüche,
**dadurch gekennzeichnet, dass**
die Referenzeingabe eine entlang wenigstens einer vorgegebenen Bewegungsbahn erfolgende Bewegung zumindest eines Körperteils der Person umfasst.

5. Verfahren nach einem der vorhergehenden Ansprüche,
**dadurch gekennzeichnet, dass**
die Referenzeingabe eine vorgegebene Abfolge von Bewegungen zumindest eines Körperteils der Person umfasst.

6. Verfahren nach einem der vorhergehenden Ansprüche,
**dadurch gekennzeichnet, dass**
ein mobiles Endgerät (22) verwendet wird.

7. Verfahren nach Anspruch 6,
**dadurch gekennzeichnet, dass**
das Freigeben des Hilfsantriebs (34) umfasst, dass der Hilfsantrieb (34) für ein mittels des mobilen Endgeräts (22) erfolgendes, leitungsloses Bedienen wenigstens eines zum Antreiben des Anhängers (10) ausgebildeten Motors des Hilfsantriebs (34) und ein aus dem Bedienen des Motors resultierendes, durch den Motor bewirktes Antreiben des Anhängers (10) freigegeben wird.

8. Verfahren nach Anspruch 6 oder 7,
**dadurch gekennzeichnet, dass**
als die Eingabeeinrichtung (28) eine Eingabeeinrichtung (28) des mobilen Endgeräts (22) verwendet wird.

9. Verfahren nach Anspruch 8,
**dadurch gekennzeichnet, dass**
als die Eingabeeinrichtung (28) ein berührungsempfindlicher Bildschirm (26) des mobilen Endgeräts (22) verwendet wird.

10. Hilfsantrieb (34) für einen Anhänger (10), wobei der Hilfsantrieb (34) zum Durchführen eines Verfahrens nach einem der vorhergehenden Ansprüche ausgebildet ist.

11. Verfahren zum Betreiben einer Erfassungseinrichtung zum Ermitteln eines Zustands zumindest eines Teils eines Fahrzeugs, bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- die Erfassungseinrichtung für das Ermitteln des Zustands des Fahrzeugs und/oder eine zum Anzeigen wenigstens einer den ermittelten Zustand charakterisierenden Information ausgebildete, elektronische Anzeige für das Anzeigen der Information dann und nur dann freigegeben wird, wenn der Vergleich der Freigabeeingabe mit der Referenzeingabe ergibt, dass die Freigabeeingabe mit der Referenzeingabe übereinstimmt.

12. Verfahren zum Betreiben einer Waage zum Ermitteln eines Gewichts eines Fahrzeugs, bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- die Waage für das Ermitteln des Gewichts des Fahrzeugs und/oder eine zum Anzeigen wenigstens einer das ermittelte Gewicht charakterisierenden Information ausgebildete, elektronische Anzeige für das Anzeigen der Information dann und nur dann freigegeben wird, wenn der Vergleich der Freigabeeingabe mit der Referenzeingabe ergibt, dass die Freigabeeingabe mit der Referenzeingabe übereinstimmt.

13. Verfahren zum Aktualisieren eines zum Betreiben eines Hilfsantriebs (34) für einen Anhänger (10) ausgebildeten und in einem elektronischen Datenspeicher des Hilfsantriebs (34) gespeicherten Computerprogramms, bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- das Aktualisieren des Computerprogramms dann und nur dann freigegeben und durchgeführt wird, wenn der Vergleich der Freigabeeingabe mit der Referenzeingabe ergibt, dass die Freigabeeingabe mit der Referenzeingabe übereinstimmt.

14. Verfahren zum Auslesen eines elektronischen Fehlerspeichers eines Anhängers und/oder eines Hilfsantriebs (34) für einen Anhänger (10), bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- das Auslesen des Fehlerspeichers dann und nur dann freigegeben und durchgeführt wird, wenn der Vergleich der Freigabeeingabe mit der Referenzeingabe ergibt, dass die Freigabeeingabe mit der Referenzeingabe übereinstimmt.

15. Verfahren zum Fernsteuern wenigstens einer Komponente eines Anhängers (10) von außerhalb des Anhängers, bei welchem:
- mittels einer Eingabeeinrichtung (28) eine durch eine Person bewirkte Freigabeeingabe in die Eingabeeinrichtung (28) erfasst wird;
- mittels einer elektronischen Recheneinrichtung die Freigabeeingabe mit einer vorgegebenen Referenzeingabe verglichen wird; und
- die Komponente für das Fernsteuern der Komponente dann und nur dann freigegeben wird, wenn der Vergleich der Freigabeeingabe mit der Referenzeingabe ergibt, dass die Freigabeeingabe mit der Referenzeingabe übereinstimmt.
